# EUROPÄISCHE PATENTANMELDUNG

(11) **EP 3 553 113 A1**
(43) Veröffentlichungstag der Anmeldung: **16.10.2019**
(21) Anmeldenummer: 18167161.1
(22) Anmeldetag: 13.04.2018
(51) Int. Cl.: C08G 69/46, C08G 69/48, C08J 11/26

(54) **VERFAHREN ZUR KONTROLLE DER MOLEKULAREN STRUKTUR VON POLYAMIDEN**

(71) Anmelder: L. Brüggemann GmbH & Co. KG, 74076 Heilbronn (DE)
(72) Erfinder: Bergmann, Klaus, 74076 Heilbronn (DE)
(74) Vertreter: Grünecker Patent- und Rechtsanwälte PartG mbB

(57) **Zusammenfassung**

Die vorliegende Erfindung stellt ein Verfahren zur Kontrolle der molekularen Struktur und gezielten Funktionalisierung von Polyamiden zur Verfügung, umfassend die Reaktion eines Polyamids mit mindestens zwei der nachfolgend definierten Additive, ausgewählt unter:
a) einem ersten Additiv, umfassend eine Säure und/oder ein Säureanhydrid und einen vorzugsweise polymeren Träger,
b) einem zweiten Additiv, umfassend ein Oxazolin und/oder Amin optional vermischt mit einem Träger,
c) einem dritten Additiv, umfassend eine Verbindung zur Kettenverlängerung oder Kettenverzweigung, optional vermischt mit einem Träger, wobei
die Reaktion des Polyamids mit den mindestens zwei Additiven so gesteuert wird, dass zunächst die Reaktion mit einem der Additive erfolgt und anschließend die Reaktion mit dem anderen Additiv.

Die vorliegende Erfindung betrifft außerdem ein Polyamid, erhältlich durch das erfindungsgemäße Verfahren.

## Beschreibung

Die vorliegende Erfindung betrifft ein Verfahren zur Kontrolle der molekularen Struktur und der gezielten Funktionalisierung von Polyamiden. Die Erfindung umfasst auch gezielt funktionalisierte verstärkte und unverstärkte Polyamide, die durch das erfindungsgemäße Verfahren erhältlich sind.

### Stand der Technik

Polyamide sind Kunststoffe, die einen breiten Einsatzbereich aufweisen. Aus Polyamiden oder Poylamidcompounds hergestellte Formteile werden üblicherweise mittels Spritzgussverfahren oder Extrusionsverfahren verarbeitet. Beim Spritzgießen wird der Kunststoff aus einem Plastifiziergerät, das den Kunststoff auf Schmelztemperatur erwärmt, in ein Formwerkzeug gespritzt, in welchem er erst verdichtet wird und dann erkaltet. Beim Extrudieren gelangt der Kunststoff durch einen Trichter in einen Zylinder, wird aufgeschmolzen, homogenisiert und verdichtet, um dann mittels einer Schnecke durch eine Düse gepresst zu werden. Diese Anlage wird Extruder genannt. Extruder werden zur Fertigung von Profilen, Rohren, Platten, Textilfasern und Masterbatches (Farbkonzentraten) verwendet.

Polyamide, die in Spritzgussverfahren verarbeitet werden, sollten einen höheren Schmelzindex (MFI) aufweisen als Polyamide, die als thermoplastische Extrusionsmassen Einsatz finden. Extrusionsmassen haben üblicherweise eine höhere relative Molekülmasse und damit eine höhere Schmelzviskosität bzw. einen niedrigeren Schmelzindex, verglichen mit Spritzgussmassen aus den gleichen Werkstoffen. Höhere Schmelzviskositäten bzw. niedrigere Schmelzindices ermöglichen unter anderem ein besseres Stehvermögen nach dem Austritt aus der Düse beim Extrudieren. Höhere relative Molmasse, höhere Schmelzviskosität bzw. verringerter Schmelzindex ist außerdem typischerweise mit verbesserten mechanischen Werten verbunden. Die Verarbeitung im Spritzguss ist jedoch schwieriger.

Polyamide werden durch Zusatz von Säuren oder Säureanhydriden bei hohen Temperaturen in der Schmelze schnell und stark abgebaut. Dieses Prinzip wird für das chemische Recycling von Polyamid 6 eingesetzt. (E. Meusel, E. Seifert, E. Taeger, Chemisches Recycling von Polyamideinlagevliesstoffabfällen, Gummi Fasern Kunststoffe 1998, 51(2) Seiten 126 bis 130). Dieser Artikel beschreibt, dass Polyamid in der Schmelze unter anderem mit Dicarbonsäuren partiell zu Oligo- bzw. Polyamiddicarbonsäuren abgebaut werden kann. Durch das Mischungsverhältnis der Komponenten wird der Abbaugrad bestimmt. Dabei greift die aliphatische Dicarbonsäure zunächst an den stärker basischen Aminoendgruppen an, zudem erfolgt die Spaltung der Molekülketten. Die Spaltung unterliegt statistischen Regeln und somit entstehen Bruchstücke unterschiedlicher Kettenlänge. Die Spaltprodukte können anschließend mit aliphatischen Diaminen zu Produkten umgesetzt werden, die aufgrund ihres Schmelzverhaltens und ihrer viskoelastischen Eigenschaften gute Schmelzkleber sind.

K.-J. Eichhorn, D. Lehmann, D. Voigt, Journal of Applied Polymer Science 1996, Vol. 62, Seiten 2053-2060 beschreiben, dass lange Polymerketten während eines Extrusionsprozesses sehr schnell zu niedrigmolekularen funktionalisierten Polymeren und Oligomeren abgebaut werden können. Die so erhaltenen niedrigmolekularen Bestandteile können aufgereinigt werden und zum Herstellen neuer Blockcopolyamide verwendet werden. Die Untersuchungen wurden mit PA6 und Trimellitsäureanhydrid durchgeführt. Es wurden zwei unterschiedliche Reaktionsmechanismen beobachtet. Der erste ist eine Reaktion vom Anhydrid mit Aminoendgruppen von PA6, der zweite ist eine Reaktion von Amidgruppe mit Anhydrid unter Kettenspaltung. Allerdings wird bei dieser Reaktion ein Gemisch aus verschiedensten unterschiedlichen Abbau- und Reaktionsprodukten erhalten.

D. Lehmann, Polymers-Opportunities and Risks II: Sustainability, Product Design and Processing 2010, 12, 163-192 beschreibt die Schmelzmodifizierung von Polyamiden zu Oligoamiden. Es werden Abbaureaktionen in der Schmelze beschrieben. Der Abbau erfolgt erneut durch Zugabe von Carbonsäuren oder Carbonsäureanhydriden. Nach dem Zusatz der Abbauverbindung in eine Polyamidschmelze bei einer Temperatur über 230 °C kann ein schneller Abfall der Schmelzviskosität nach kurzer Zeit beobachtet werden. Dabei wurden Oligoamide mit definiertem Molekulargewicht und einer engen Molekulargewichtsverteilung erhalten. Ferner wird ein Mechanismus zum Abbau und Pfropfcopolymerbildung mittels Extrusion beschrieben.

Die Druckschrift WO-A-01/21712 betrifft Polyamidzusammensetzungen, in die organische Säuren eingearbeitet sind um die Viskosität abzusenken, aber ohne die Zähigkeit signifikant zu reduzieren. Insbesondere beschreibt die WO 01/21712 verstärkte Polyamidzusammensetzungen, umfassend 40 bis 94 Gew.- % Polyamid, 6 bis 60 Gew.-% eines Verstärkers, ausgewählt aus der Gruppe bestehend aus Kautschuk und ionischen Copolymeren und bis zu 10 Gew.-% einer organischen Säure. Zur Herstellung werden Polyamid, Verstärker und organische Säuren in einem Schritt in der Schmelze miteinander vermischt oder ein Gemisch aus Polyamid und Verstärker wird in der Schmelze mit der Säure gemischt oder Polyamid und Verstärker werden vermischt und anschließend in der Schmelze mit der Säure vermischt. Man erhält ein verstärktes Polyamid mit erhöhter Fließfähigkeit und erniedrigter Schmelzviskosität ohne die Zähigkeit negativ zu beeinflussen.

Allerdings ist der Kettenabbau durch Säuren aufgrund der hohen Reaktionsgeschwindigkeiten in der Schmelze schwer zu kontrollieren und kann daher eine Verschlechterung der mechanischen Eigenschaften nach sich ziehen. Ferner betrifft die WO-A-01/21712 Kautschuk-verstärkte Polyamide. Dabei ist es notwendig, dass der Kautschuk eine funktionelle Gruppe enthält, die mit den Endgruppen des Polyamids reagieren kann. Des Weiteren ist es notwendig, dass die Schmelzviskositäten des Kautschuks und des Polyamids ähnlich sind, um eine gute Dispersion zu erhalten.

Die Druckschrift DE-A-199 20 336 betrifft ein Verfahren zur Aufkondensierung von Oligo- und/oder (Co-)Polyamiden in Gegenwart eines Additivs. Als Additiv wird dabei eine Verbindung mit mindestens zwei Carbonateinheiten eingesetzt.

Die DE-A-41 36 082, DE-A-41 36 083, DE-A-41 36 081, DE-A-41 36 078 und DE-A-41 36 079 offenbaren Verfahren zur Herstellung von schnell aufkondensierten Polyamiden. Dabei werden als Additive zur schnellen Aufkondensierung Diisocyanate, verkappte bzw. blockierte Diisocyanate oder Oligo- und/oder Polyurethane verwendet. M. Xanthos beschreibt darüberhinaus in Reactive Extrusion, Principles and Practice, Hanser, München (1992) die Verwendung von Epoxidverbindungen zur Aufkondensierung von Polyamiden.

Diese Verfahren weisen allerdings verschiedene Nachteile auf. Zum einen ist die Verwendung von Diisocyanaten in freier, blockierter oder verkappter Form dahingehend nachteilhaft, dass die z. T. hohe Toxizität der entstehenden freien Verbindungen besondere Schutzmaßnahmen bei der Verwendung erfordert. Die Dosierung in Produktionsmaschinen ist darüber hinaus problematisch. Weiterhin besitzen diese Verbindungen eine so hohe Reaktivität, dass teilweise eine sehr schnelle Reaktion unter Gelbildung und Vernetzung erfolgt, was zu unerwünschten Schwankungen in der Produktqualität und zu Inhomogenitäten im Endprodukt führt und beispielsweise in Spinnverfahren Störungen verursacht.

Ein weiteres Beispiel zur Einstellung der Viskosität von Polyamidschmelzen offenbart die EP-A-408957. Zur Viskositätserhöhung von Lactamschmelzen werden dort bestimmte (Co-)Polyamide, welche sich in der Lactamschmelze lösen, verwendet. Der Zusatz der (Co-)Polyamide ist allerdings auf die angegebenen Lactamschmelzen beschränkt und führt außerdem zu einer wesentlichen Verteuerung der Endprodukte, da eine große Menge an Additiv zugesetzt werden muss.

Weiterhin ist auch das reaktive Mischen von Polyamiden mit Polycarbonaten bekannt. Beispielsweise offenbaren A. Valenza et al. in Intern. Polymer Processing IX 3 (1994), dass Polyamid 6 unter bestimmten Bedingungen mit Polycarbonaten umgesetzt werden kann. Dabei entstehen aus den eigentlich nicht mischbaren Polymeren durch chemische Reaktionen unter anderem Blockcopolymere, was zu einer Verbesserung z. B. der Lösungsmittelbeständigkeit von Polycarbonaten führt. Allerdings werden nur dann Reaktionen erreicht, wenn ein hoher Anteil an NH₂-Endgruppen in dem verwendeten Polyamid vorliegt. Polyamide mit COOH-Endgruppen reagieren laut dieser Publikation nicht.

Insgesamt zeigen die modifizierten Polyamide des Standes der Technik keine stabilen Weiterverarbeitungseigenschaften, d. h. eine Mehrfachextrusion ist nur mit einer Verschlechterung von mechanischen Eigenschaften möglich. Dies ist für viele Anwendungen nicht akzeptabel, da der beispielsweise in einem Spinnprozess anfallende Abfall als reines Polymer oft nur unter erneuter Modifizierung wiederverwendbar ist. Darüber hinaus reagieren die in den oben beschriebenen Verfahren eingesetzten Additive häufig mit anderen Zuschlagstoffen wie Stabilisatoren oder Verarbeitungshilfsmitteln, was zu Nebenreaktionen und zu unerwünschten Verfärbungen führt und einen erhöhten und damit teureren Einsatz der Additive nötig macht.

### Aufgabe der vorliegenden Erfindung

Es ist deshalb die Aufgabe der vorliegenden Erfindung, die oben genannten Probleme des Standes der Technik zu lösen und ein Verfahren bereitzustellen, mit dem Polyamide mit definierter molekularer Struktur hergestellt werden können. Ferner ist es die Aufgabe der vorliegenden Erfindung, die gewünschten Eigenschaften von Polyamiden stabil und sicher einzustellen, wobei auch eine Mehrfachverarbeitung des erhaltenen Aufkondensationsproduktes möglich sein sollte.

### Kurze Beschreibung der Erfindung

Diese Aufgabe wird gelöst durch ein Verfahren zur Kontrolle der molekularen Struktur von Polyamiden gemäß Anspruch 1. Bevorzugte Ausgestaltungen sind in den Unteransprüchen sowie der nachfolgenden Beschreibung angeführt. Zusätzlich stellt die vorliegende Erfindung ein Polyamid gemäß Anspruch 15 zur Verfügung. Auch für dieses Polyamid werden bevorzugte Ausgestaltungen in der nachfolgenden Beschreibung erläutert.

### Kurze Beschreibung der Figur

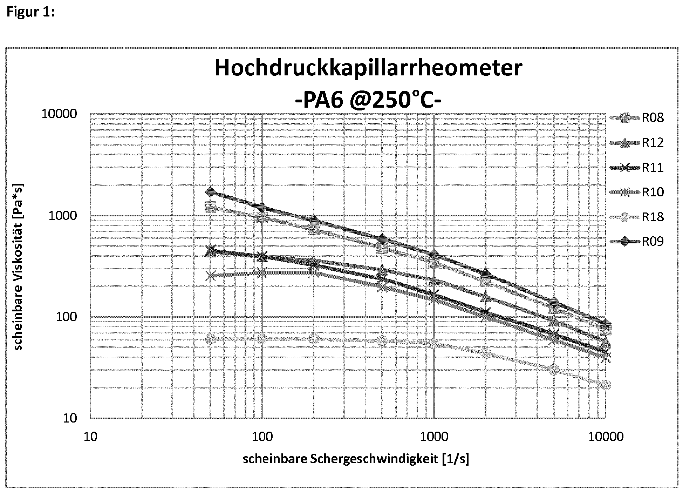

Figur 1 zeigt die mit einem Hochdruck-Kapillarrheometer bestimmten Fließfähigkeiten von erfindungsgemäßen Polyamiden.

### Detaillierte Beschreibung der Erfindung

Erfindungsgemäß ist wesentlich, dass die Reaktion des Polyamids mit den mindestens zwei Additiven so gesteuert wird, dass zunächst die Reaktion mit einem der Additive erfolgt und anschließend die Reaktion mit dem anderen Additiv. Diese sequentielle Reaktion kann wie nachfolgend detailliert beschrieben durch sequentielles Einmischen in die Polyamidschmelze erreicht werden, da dann zunächst das zuerst eingemischte Additiv reagiert, bevor das nächste zugegeben wird. Diese Reaktionssteuerung muss lediglich sicherstellen, dass das zuerst zugegebene Additiv soweit abreagiert ist, dass die Reaktion mit dem anschließend zugegebenen Additiv die Reaktion mit dem zuerst zugegebenen Additiv nicht beeinträchtigt bzw. die Reaktion mit dem später zugegebenen Additiv selbst nicht beeinträchtigt wird. Alternativen zur sequentiellen Zugabe sind ebenfalls nachfolgend beschrieben, d.h. Verfahrensausgestaltungen bei denen die Additive gleichzeitig zugegeben werden können, die erfindungsgemäße Steuerung zur Sicherstellung der aufeinanderfolgenden Reaktion aber anders realisiert wird.

Eine Ausführungsform der vorliegenden Erfindung ist ein Verfahren, umfassend die Reaktion eines Polyamids mit mindestens zwei der nachfolgend definierten Additive, ausgewählt unter a) einem ersten Additiv (nachfolgend auch Additiv (1)), umfassend eine Säure und/oder ein Säureanhydrid in einem Träger, vorzugsweise polymeren Träger, wobei die Säure und/oder das Säureanhydrid in dem Träger eingebracht und, beispielsweise in der Schmelze des Trägers, gleichmäßig verteilt wird, b) einem zweiten Additiv (nachfolgend auch Additiv (2)), umfassend ein Oxazolin und/oder Amin in einem Träger, vorzugsweise in einem polymeren Träger, und c) einem dritten Additiv (nachfolgend auch Additiv (3)), umfassend eine Verbindung zur Kettenverlängerung oder Kettenverzweigung in einem Träger, vorzugsweise in einem polymeren Träger,
d) Vermischen von Polyamid mit einem der Additive a) bis c) in der Schmelze, und
e) Vermischen des in Schritt d) gebildeten Gemisches oder Reaktionsproduktes mit einem der anderen Additive a) bis c).

Der Träger sollte dabei nicht bzw. nur unwesentlich mit dem jeweils eingearbeiteten Additiv reagieren.

Durch die schrittweise Einmischung der oben skizzierten Additive in der Schmelze laufen im erfindungsgemäßen Verfahren unterschiedliche Reaktionen, wie Kettenspaltung, -verzweigung und -aufbau ab, so dass erfindungsgemäß ein gezielt modifiziertes Polyamid erhalten werden kann. Insbesondere durch die Additive a) und b) wird eine Modifikation der Funktionalität des Polyamids erreicht, was auch für weitere Reaktionen gezielt genutzt werden kann. Insbesondere wenn Additiv a) und/oder b) so eingesetzt wird, dass die damit in das Polyamid eingebrachte Funktionalität zumindest teilweise erhalten bleibt, ergeben sich modifizierte Polyamide, die für weitere Reaktionen, Modifikationen oder auch Einsatzmöglichkeiten mit interessanten und wertvollen Funktionalitäten ausgestattet sind.

In bevorzugten Ausführungsformen wird in Schritt d) das erste oder dritte Additiv eingesetzt, während in Schritt e) dann eines der Additive eingesetzt wird, das nicht in Schritt d) verwendet wurde.

Diese Aufgabe wird auch gelöst durch ein optional gefülltes Polyamid, erhältlich durch das erfindungsgemäße Verfahren.

Bevorzugte Ausführungsformen sind in den Unteransprüchen 2 bis 14 dargestellt.

Überraschenderweise ist das erfindungsgemäße Verfahren insbesondere geeignet zur:
I. Herstellung von hochgefüllten Compounds, z.B. mit Glasfasergehalt von über 50 Gew.-%. Bisher bestehen bei hochgefüllten Systemen erhebliche Probleme bei der Verarbeitung sowie in der durchgängigen Benetzung der Glasfasern mit einer hochviskosen und schwer fließenden Polyamid-Matrix. Starke Abrasion und Polymerabbau aufgrund sehr hoher Scherraten sowie aufgrund hoher Verarbeitungstemperaturen führen u.a. zu Farbveränderungen und Einbußen in der Mechanik sowie zu optisch unschönen und unebenen Oberflächen mit deutlich sichtbaren Glasfasern.
II. Herstellung besonders verarbeitungsstabiler (schmelzestabiler) Polyamide. Das bedeutet, dass diese Polyamide in der Schmelze so stabil sind, dass die Viskosität und die Endgruppenkonzentrationen sich während der Verarbeitung in der Schmelze nicht oder nur in sehr geringem Ausmaß ändern. Verarbeitungsstabil bedeutet in Zusammenhang mit dieser Erfindung daher ein wesentlich robusteres Verhalten während der Schmelzeverarbeitung zu Folien, Monofilamenten, Fasern, Spritzgussteilen oder anderen Produkten, welches sich durch verringerte Viskositätsänderung auch bei aggressiveren Verarbeitungsbedingungen auszeichnet. So sind z.B. beim Extrusionsblasformen eine gleichbleibende Extrusionsverarbeitbarkeit und geringe Wanddickenschwankungen des extrudierten Schlauches sehr wichtig für die Qualität des Fertigteils, z.B. eines Ladeluftrohres für den Automobilbereich. Idealerweise sollen Polyamide bei den Verarbeitungsschritten Spritzguss oder Extrusion keine signifikante Änderung der Viskosität aufweisen. Sowohl ein deutlicher Abbau als auch ein Aufbau der Viskosität ist unerwünscht, da dies die Reproduzierbarkeit bei der Verarbeitung beeinträchtigen kann und zudem vor allem zu Inhomogenität der mechanischen Eigenschaften über das Werkstoffteil bzw. zu Schwankungen der mechanischen Eigenschaften von Teil zu Teil führt. Dies ist insbesondere dann bedeutsam, wenn enge Toleranzen gefordert sind. Weiterhin bleiben die Eigenschaften eines schmelzestabilen Polyamids auch bei Mehrfachextrusion stabil.
III. Herstellung von Polyamiden mit verbesserter Hydrolysebeständigkeit. Diese Anforderungen bestehen besonders bei Anwendungen von Polyamid-Werkstoffen in Heißwasser oder Dampf sowie im Kontakt mit Wasser-Glykolgemisch. Vor allem die Automobilindustrie hat für Bauteile im Kühlkreislauf wachsende Anforderungen an die Materialien (typischerweise Polyamid 6.6 mit 30% Glasfasern) hinsichtlich sehr guter Langzeitbeständigkeit auch bei höheren Temperaturen. Da Carboxylgruppen die Hydrolysereaktion von Polyamiden katalysieren, kann die Hydrolysebeständigkeit erhöht werden, indem die Konzentration der freien Carboxylendgruppen reduziert wird. Dies ist umso wichtiger, da bei der hydrolytischen Spaltung einer Amidgruppe eine zusätzliche freie Carboxylendgruppen entsteht, so dass die Hydrolyse sich selbst beschleunigt. In einer bevorzugten Ausführungsform enthält das erfindungsgemäß hergestellt Polyamid daher reaktive Gruppen, die mit den bei einsetzender Hydrolyse gebildeten zusätzlichen Endgruppen reagieren können und diese so blockieren, dass ein entsprechender Autokatalyse-Kreislauf weitgehend unterbunden werden kann.
IV. Herstellung von Polyamiden auf einem Doppelschneckenextruder mit hoher Schlagzähigkeit unter Verzicht auf Schlagzähmodifikatoren, wobei gleichzeitig eine sehr niedrige scheinbare Viskosität erreicht wird und damit eine gute Verarbeitbarkeit insbesondere in Spritzguss und Extrusion, die sogar die Verarbeitbarkeit von Standard-Spritzgusstypen übertrifft. Eine Schlagzähmodifizierung von Polyamiden führt dagegen zu nur schwer zu verarbeitenden Werkstoffen (aufgrund ihrer hohen scheinbaren Viskosität), die zudem als generellen Nachteil einen deutlichen Verlust von Steifigkeit und Festigkeit aufweisen. Die erfindungsgemäß hergestellten Polyamide zeichnen sich dagegen durch eine hohe Steifigkeit und Festigkeit aus, die gegenüber einem Standardspritzgusstyp nicht abfällt.
V. Herstellung von Polyamiden mit einem verbesserten mechanischen Eigenschaftsprofil, insbesondere deutlich erhöhte Bruchdehnung und höhere Bruchspannung ohne Einbußen bei Steifigkeit und Zugfestigkeit.

Insbesondere die gemäß IV. und V. erfindungsgemäß hergestellten Werkstoffe weisen eine bessere Verformbarkeit und ein höheres Energieaufnahmevermögen auf, ohne dabei an mechanischer Festigkeit zu verlieren. Die in IV. und V. beschriebenen Eigenschaftsprofile sind überraschend und ungewöhnlich und erlauben dem Anwender neue Möglichkeiten mit dem Ziel den steigenden Anforderungen hinsichtlich Metallersatz durch polymere Werkstoffe gerecht zu werden.

In der vorliegenden Erfindung wurden insbesondere folgende Möglichkeiten zur Herstellung von Polyamiden und zur Kontrolle der molekularen Struktur und der gezielten Funktionalisierung von Polyamiden bereitgestellt:
Schritt d'): Abbau von Polyamiden durch ein erstes Additiv, umfassend eine Säure und/oder ein Säureanhydrid in einem polymeren Träger und Erzeugen von Polyamiden mit niedriger Viskosität und hohen Carboxylendgruppenkonzentrationen.
Schritt e') Blockieren der Carboxylendgruppen von Polyamiden ausgehend von den in Schritt d') erhaltenen Polyamiden mit niedriger Viskosität und hohen Endgruppenkonzentrationen durch Vermischen mit einem weiteren Additiv. Neben der Endgruppenverkappung kann auch ein Viskositätsaufbau durch Verknüpfung von Polymerketten einhergehen. Geeignete reaktive Additive hierfür sind beispielsweise Oxazoline, z.B. 1,3-Phenylbisoxazolin oder 1,4- Phenylbisoxazolin. Neben der Endgruppenverkappung kann alternativ auch ein Viskositätsabbau einhergehen. Geeignete Additive hierfür sind Amine (bevorzugt in einem nichtreaktiven Träger), wie z.B. Tris(hydroxymethyl)-aminomethan oder Bis(hexamethylene)triamine. Alternativ kann in Schritt e') ein Aufbau der niedrigviskosen Polyamide aus Schritt d) oder d') durch Kettenverlängerer oder Kettenverzweiger stattfinden, wie nachfolgend für Option d") beschrieben. Bevorzugt dafür sind reaktive Additive, die zu Kettenverzweigungen führen. Beispiele sind Pyromellitsäuredianhydrid und Ethylen-Maleinsäureanhydrid-Copolymere und Diphosphonite. Die verzweigten Polymerstrukturen ermöglichen ein verbessertes Fließverhalten gegenüber rein linearen Polymerketten.

Beispielsweise kann in einer bevorzugten Ausführungsform in Verbindung mit einer der oben oder unten genannten Ausführungsformen ein Kettenschneider-Additivbatch (Carbonsäure in einem nichtreaktiven Träger) direkt mit dem Polyamid-Granulat entweder vorgemischt oder über ein separates Dosiersystem zugeführt werden. Das endgruppenblockierende bzw. kettenverlängerende oder kettenspaltende reaktive Additiv (bzw. Additivgemisch oder Konzentrat oder Batch) kann dann über eine Seitendosierung direkt auf der gleichen Compoundierlinie zugegeben werden, vorzugsweise auf einer Anlage mit großem L/D Verhältnis (beispielsweise einem zwei oder mehrwelligen Extrudern). Alternativ kann die Zugabe des zweiten reaktiven Additivs auch in einem separaten Compoundierschritt erfolgen.

Weiterhin ist es erfindungsgemäß auch möglich das erste Additiv in einem Compoundierschritt zuzugeben und das zweite Additiv dann in einem Schritt, der direkt zur Herstellung eines Endprodukts führt. Eine derartige Verfahrensausgestaltung umfasst beispielsweise die Zugabe des ersten Additivs in einem Compoundierschritt, nach dem das Polyamid dann beispielsweise in der Form von Pellets oder anderen geeigneten Formen als Zwischenprodukt zur Verfügung gestellt wird (was Lagerung und/oder Transport ermöglicht). Das zweite Additiv wird dann beispielsweise direkt in einem Spritzgussverfahren zugeführt, so dass das hergestellte Produkt mit den beiden erfindungsgemäß vorgesehenen Additiven versetzt wurde und die damit verbundenen, gewünschten Reaktionen und Modifikationen erfolgt sind. Eine weitere erfindungsgemäße Alternative dieser Option des erfindungsgemäßen Verfahrens ist die Herstellung hochgefüllter Compounds bzw. von Produkten gemäß Option I. bis III. Hier kann zunächst die Modifikation mit dem Additiv gemäß Schritt d') erfolgen. Das daraus resultierende, modifizierte Polyamid kann dann, wieder zum Beispiel in der Form von Pellets, bereitgestellt werden, bevor dann das zweite Additiv eingesetzt wird, um ein Endprodukt mit dem gewünschten Eigenschaftsprofil zu erhalten bzw. Produkte mit einem hohen Anteil an Glasfaser oder ähnlichen Füllstoffen.

Es ist grundsätzlich auch möglich, und diese Ausführungsform ist als zur vorliegenden Erfindung zugehörig zu betrachten, die beiden reaktiven Additive gleichzeitig dem Polyamid zuzugeben. Auch eine derartige gleichzeitige Zugabe kann im Rahmen der vorliegenden Erfindung als in Übereinstimmung mit dem vorstehend definierten Verfahren angesehen werden. Dies setzt lediglich voraus, dass die gleichzeitig eingemischten Additive sich in ihren aktiven Reaktionstemperaturfenstern soweit unterscheiden (also die Temperaturbereiche, in denen die jeweiligen Additive in der Schmelze gemischt vorliegen und reagieren), dass zunächst das eine und erst anschließen das andere reagiert. Eine derartige Ausführungsform lässt sich insbesondere dann erreichen wenn z.B. der Schmelzpunkt von Additiv (2) deutlich über dem Schmelzpunkt von Additiv (1) liegt und eine Steuerung des Reaktionszeitpunktes über die entsprechend eingestellten Prozesstemperaturen in verschiedenen Verfahrenszonen eines Doppelschneckenextruders gezielt erfolgen kann. Eine weitere Möglichkeit der gleichzeitigen Zugabe der Additive besteht darin, wenn diese in unterschiedlichen Trägern vorliegen, wobei die Träger, beispielsweise durch unterschiedliche Erweichungstemperaturen, Schmelztemperaturen etc., selbst eine zeitlich aufeinanderfolgende Freisetzung der Additiven, die dann beispielsweise ähnliche aktive Reaktionstemperaturen aufweisen können, ermöglichen. Eine zusätzliche Alternative wäre die Einbringung der Additive in einen Träger, aus dem die Additive aber zu unterschiedlichen Zeiten freigesetzt werden, beispielsweise, da die Additive aufgrund Unterschiede im Molekulargewicht unterschiedlichen Migrations- oder Diffusionstendenzen zeigen. Erfindungswesentlich ist lediglich, dass sichergestellt ist, dass die Additiven in einer gewünschten, kontrollierbaren Art sequentiell reaktiv werden. Eine weitere erfindungsgemäße Variante ist die Sicherstellung der erforderlichen sequentiellen Reaktion dadurch, dass Additive verwendet werden, die sich in ihrer Reaktionskinetik so stark unterscheiden, dass zunächst das eine und erst in einem ausreichenden zeitlichen Abstand das zweite reagiert. Ein Beispiel für eine derartige erfindungsgemäße Verfahrensausgestaltung ist beim Einsatz von Additiv (1) in Kombination mit Additiv (2) oder (3) möglich, wenn Additiv (1) das Additiv ist, welches als erstes reagieren soll. Hier hat es sich gezeigt, dass die Reaktion einer aktiven Komponente des Additivs (1) so schnell erfolgt, dass die reaktionsträgeren Additive (2) oder (3) zwar gleichzeitig in das Polyamid eingebracht, jedoch aufgrund der anderen Kinetik erst nach der Reaktion des Additivs (1) mit dem Polyamid selbst mit dem dadurch erhaltenen Reaktionsprodukt reagieren.

Weitere bevorzugte Ausführungsformen lassen sich wie folgt beschreiben:
Schritt d") Einführung von Verzweigungen in die Polyamidstruktur durch geeignete Kettenverzweiger und/oder Aufbau von Polyamiden mit hoher relativer Viskosität durch Kettenverlängerer. Bevorzugt sind reaktive Additive, die zu Kettenverzweigungen führen. Beispiele sind Pyromellitsäuredianhydrid und Ethylen-Maleinsäureanhydrid-Copolymere. Weiterhin können auch Diphosphonit wie z.B. Tetrakis(2,4-di-tert-butylphenyl)-4,4-biphenyldiphosphonite eingesetzt werden. Die verzweigten Polymerstrukturen ermöglichen ein verbessertes Fließverhalten gegenüber rein linearen Polymerketten.
Schritt e")
   a. Abbau der hochviskosen Polyamide aus Schritt d") durch ein Additiv, umfassend eine Säure und/oder ein Säureanhydrid in einem polymeren Träger; oder
   b. Blockieren der Carboxylendgruppen analog zu Schritt e') wie bereits vorstehend beschrieben, ausgehend von den in Schritt d") erhaltenen Polyamiden mit hoher Viskosität. Neben der Endgruppenverkappung kann auch ein Viskositätsaufbau durch Verknüpfung von Polymerketten einhergehen. Geeignete reaktive Additive hierfür sind beispielsweise Oxazoline, z.B. 1,3-Phenylbisoxazolin oder 1,4- Phenylbisoxazolin. Neben der Endgruppenverkappung kann alternativ auch ein Viskositätsabbau einhergehen. Geeignete Additive hierfür sind Amine (bevorzugt in einem nichtreaktiven Träger), wie z.B. Tris(hydroxymethyl)-aminomethan oder Bis(hexamethylene)triamine.

Die mit dem Verfahren umfassend Schritte d') und e') erzeugten Polyamide sind zur Herstellung von hochgefüllten Compounds gemäß I., zur Herstellung von verarbeitungsstabilen (schmelzestabilen) Polyamiden gemäß II. und zur Herstellung von Polyamiden mit verbesserter Hydrolysebeständigkeit gemäß III. besonders geeignet.

Die mit dem Verfahren umfassend Schritt d") und Schritt e") Variante a. erzeugten Polyamide sind zur Herstellung von Polyamiden auf einem Doppelschneckenextruder mit hoher Schlagzähigkeit unter Verzicht auf Schlagzähmodifikatoren gemäß IV. besonders geeignet.

Die mit dem Verfahren umfassend Schritt d") und Schritt e") Variante b. erzeugten Polyamide sind zur Herstellung von Polyamiden mit einem verbesserten mechanischen Eigenschaftsprofil gemäß V. besonders geeignet.

Durch die Vorvermischung der Säure bzw. des Säureanhydrids in einem polymeren Träger, mit dem diese Säure bzw. das Säureanhydrid nicht reagiert, wird unerwarteter Weise erreicht, dass in der nachfolgenden Verarbeitung mit der Polyamidschmelze die Schmelzkomponenten sehr intensiv und gleichförmig homogen in enger Verweilzeitverteilung mit dem Polyamid vermischt werden und zur Reaktion gebracht werden können. Dadurch werden unerwarteter Weise Polyamide mit gezielt gekürzten Ketten mit enger Molekulargewichtsverteilung und mit definierten Endgruppen erhalten. Durch gezielte Kürzung kann die Viskosität der Polyamide kontrolliert und wie gewünscht eingestellt werden.

Die Einarbeitung hoher Glasfasergehalte von in der Praxis oft 50 Gew.-% bis 60 Gew.-% wird durch gute Fließeigenschaften der Polymerschmelze nach Kettenabbau in Schritt d') deutlich verbessert. Mithilfe einer nachfolgenden Aufkondensierung werden sehr gute Eigenschaftsprofile wie z.B. Festigkeit und Modul erreicht.

Unerwarteter Weise ermöglicht das erfindungsgemäße Verfahren auch die Herstellung von besonders hochmolekularen Polyamiden, indem man gezielt von niedermolekularen Polyamiden mit hohen Endgruppenkonzentrationen ausgeht und diese in kurzer Reaktionszeit in der Schmelze mit einem geeigneten Kettenverlängerer aufkondensiert.

Verzweigte Polyamide werden durch den Einsatz geeigneter mehrfunktioneller reaktiver Additive zugänglich. Die verzweigten Polymerstrukturen ermöglichen zusätzlich zum reinen Viskositätsaufbau ein verbessertes Fließverhalten gegenüber rein linearen Polymerketten (bei gleicher relativer Viskosität).

Bei einem Abbau der Ketten mit Hilfe einer aromatischen Säure, z.B. Terephtalsäure oder Isophtalsäure, gefolgt von einem Aufbau mit Hilfe eines Kettenverlängerers, der aromatische Strukturkomponenten enthält, z.B. 1,3 Phenylbisoxazolin, wird es ermöglicht, in ein aliphatisches Ausgangspolyamid gezielt aromatische Komponenten einzufügen. Dies führt zu besseren mechanischen Eigenschaften und zu einer höheren thermischen Stabilität.

Die vorliegende Erfindung ermöglicht somit die Herstellung von Polyamiden mit gewünschten Eigenschaftsprofilen. Insbesondere ermöglicht das Verfahren der vorliegenden Erfindung die Herstellung von hochgefüllten Compounds, von besonders hochmolekularen Polyamiden, von verzweigten Polymeren, z.B. auf einem Doppelschneckenextruder, und von Polyamiden mit aromatischen Teilkomponenten, z.B. auf einem Doppelschneckenextruder.

Compoundeure, die nicht über Polymerisationsanlagen zur Herstellung von Polyamiden verfügen, sind bislang von integrierten Polyamid-Herstellern abhängig, wenn es um Anforderungen geht, die eine Änderung der Polymerstruktur erfordern. Mit dem hier beschriebenen Konzept kann die Polymerarchitektur auch auf Compoundieranlagen gezielt eingestellt werden.

In einer bevorzugten Ausführungsform in Verbindung mit einer der oben oder unten genannten Ausführungsformen, können als Ausgangspolyamide auch Rezyklate oder Mischungen von Neuware und Rezyklaten eingesetzt werden.

Erfindungsgemäß wird unter den Begriff "gleichmäßig verteilt" verstanden, dass die reaktiven Komponenten der Additive (1), (2) und (3) in dem polymeren Träger so verteilt sind, dass die Konzentration in allen Teilen des polymeren Trägers gleich ist, d.h. dass keine Stellen im polymeren Träger vorliegen, die eine deutlich höhere Konzentration an Additiv aufweisen als andere Stellen. Der Begriff "homogen verteilt" kann gleichbedeutend verwendet werden.

Erfindungsgemäß wird unter den Begriff "Aufkondensation" verstanden, dass die Molmasse durch eine Kondensationsreaktion erhöht wird.

Als Träger kommen grundsätzlich alle Stoffe (oder Gemische von Stoffen), vorzugsweise Polymere, in Frage, die mit den jeweiligen reaktiven Komponenten bei einer Temperatur in der Schmelze gemischt werden können, bei der sowohl die reaktive Komponente des Additivs (Additiv (1), Additiv (2) und Additiv (3)) als auch der Träger stabil sind, d.h. weder zerfallen, noch miteinander reagieren, noch flüchtige Bestandteile enthalten oder bilden und zudem möglichst nicht verfärben. Dabei sollten idealerweise Reaktivkomponente und Träger so gewählt werden, dass entweder Reaktivkomponente und Träger beide im geschmolzenen Zustand gemischt werden oder dass die Reaktivkomponente sich vollständig im geschmolzenen Träger lösen lässt. So kann eine homogene Mischung der Reaktivkomponente im Träger durch Mischen in der Schmelze erreicht werden.

In einer bevorzugten Ausführungsform in Verbindung mit einer der oben oder unten genannten Ausführungsformen ist der Träger ein polymerer Träger mit dem das zu modifizierende Polyamid verträglich und sehr gut mischbar ist. Ferner ist der polymere Träger vorzugsweise bei den für Polyamide typischen Verarbeitungstemperaturen thermisch stabil, enthält oder bildet möglichst wenige flüchtige Bestandteile und verfärbt nicht während der Verarbeitung. In einer weiteren Ausführungsform enthält der Träger reaktive Gruppen, die mit dem Polyamid reagieren können. Dabei kann es sich z.B. um Maleinsäureanhydrid oder Glicydyl Methacrylate enthaltende Copolymere mit Olefinen handeln. Beispiele hierfür sind Ethylen-Ethylacrylat-Glycidylmethacrylat Terpolymer (E-EA-GMA), Ethylen-Butylacrylat-Glycidylmethacrylat Terpolymer (E-BA-GMA), Ethylen-Vinylacetat-Copolymer funktionalisiert mit Maleinsäureanhydrid (E-VA-MA), Styrol-Ethylen-Butylen-Styrol Copolymer funktionalisiert mit Maleinsäureanhydrid (SEBS-MA). Diese polymeren Träger mit reaktiven Gruppen werden bevorzugt mit nicht-reaktiven polymeren Trägern (ohne reaktive Gruppen) in Kombination eingesetzt, wobei auf gute Mischbarkeit zu achten ist.

Vorzugsweise ist der polymere Träger ausgewählt aus einem Polymer oder Copolymer aus den Monomeren Ethylen, Polypropylen oder anderen Olefinen, Methacrylsäure, Vinylacetat, Acrylsäure, Acrylsäureester, oder Methacrylsäureester. Besonders bevorzugt ist der polymere Träger ein Olefin-Acrylsäureester-Copolymer oder ein Olefin-Methacrylsäureester-Copolymer, insbesondere ein Ethylen-Methylacrylat-Copolymer (EMA), ein Ethylen-Ethylacrylat-Copolymer (EEA) oder ein Ethylen-Butylacrylat-Copolymer (EBA).

Im Rahmen der vorliegenden Erfindung können auch nicht polymere Träger eingesetzt werden. Beispiele sind Gleitmittel wie primäre und sekundäre Fettsäureamidwachse, beispielsweise Ethylen-bis-stearamid (EBS), Erucamid und Stearamid, Metallseifen beispielsweise Metallstearate, Paraffinwachse, Polyolefinwachse, Fischer-Tropsch Wachse, Fettsäureester des Pentaerythritols, polare synthetische Wachse (beispielsweise oxidierte Polyolefin-Wachse oder gepfropfte Polyolefin-Wachse) oder andere Wachse, sowie andere Stoffe, die auch als Zuschlagstoffe für Polyamide bekannt sind. Bevorzugt sind EBS, Erucamid, langkettige Ester des Pentaerythrits und oxidierte Polyolefinwachse.

In einer bevorzugten Ausführungsform weist der Träger, vorzugsweise polymere Träger, idealerweise einen Schmelzpunkt auf, der niedriger ist als der Schmelzpunkt des zu verarbeitenden Polyamids. Dies ermöglicht zum einen die schonende und energiesparende Einbringung der Reaktivkomponente in den Träger bei der Herstellung des erfindungsgemäßen Additivs, weiterhin wird dadurch auch die Einbringung in das Polyamid vereinfacht. Insgesamt wird die thermische Belastung der Reaktivkomponeten sowie des Trägermaterials dadurch minimiert.

In Ausführungsformen kann der Träger auch mit einem oder mehreren weiteren Polymeren vermischt werden, die im Gegensatz zum erfindungsgemäß einzusetzenden Träger, der nicht bzw. nur unwesentlich mit der jeweiligen reaktiven Komponente reagiert, mit der enthaltenen Reaktivkomponente reagieren können. Der Anteil derartiger zusätzlicher (reaktiver) Polymere beträgt 50 Gew.-% oder weniger, insbesondere weniger als 30 Gew.-%, bezogen auf die Gesamtzusammensetzung des Additivs. Der Anteil darf auf jeden Fall nicht höher sein als der Anteil an nichtreaktivem Träger, bevorzugt beträgt er 50 Gew.-% oder weniger, stärker bevorzugt 40 Gew.-% oder weniger, und in Ausführungsformen 30 Gew.-% oder weniger, bezogen auf den Anteil an nichtreaktivem, vorzugsweise polymerem Träger. Geeignete Polymere für diese Ausführungsform können frei gewählt werden, ggf. unter Berücksichtigung des beabsichtigten Einsatzbereichs (des zu modifizierenden Polyamids). Insbesondere geeignet sind Polyamide, wie Polyamid 6 und Polyamid 6.6 sowie deren Mischungen, als auch Polyester, wie PET und PBT, sowie deren Mischungen, oder Mischungen aus Polyamiden und Polyestern. Durch den teilweisen Ersatz der nichtreaktiven Träger können beispielsweise Kosteneinsparungen realisiert werden und/oder die Mischbarkeit/Verarbeitbarkeit mit den zu modifizierenden Polyamiden verbessert werden.

In einer bevorzugten Ausführungsform in Verbindung mit einer der oben oder unten genannten Ausführungsformen ist der polymere Träger mit dem zu modifizierenden Polyamid kompatibel und lässt sich gut zu Polymerblends verarbeiten. Ferner ist der polymere Träger vorzugsweise bei den für Polyamide typischen Verarbeitungstemperaturen stabil und kann ohne Verfärbung und ohne wesentlichen Polymerabbau verarbeitet werden.

In einer bevorzugten Ausführungsform in Verbindung mit einer der oben oder unten genannten Ausführungsformen ist die Säure und/oder das Säureanhydrid im ersten Additiv a) eine Carbonsäure bzw. ein Carbonsäureanhydrid, besonders bevorzugt eine mehrfunktionelle Carbonsäure, insbesondere eine bifunktionelle Carbonsäure. Insbesondere ist die Säure ausgewählt aus der Gruppe bestehend aus Adipinsäure, Pimelinsäure, Korksäure, Azelainsäure, Sebacinsäure, Undecandicarbonsäure, Dodecandicarbonsäure, Valeriansäure, Trimethylessigsäure, Capronsäure, Caprylsäure, Terephthalsäue, Isophthalsäure oder Gemischen daraus, besonders bevorzugt ist die Säure Adipinsäure.

In einer weiteren bevorzugten Ausführungsform in Verbindung mit einer der oben oder unten genannten Ausführungsformen ist das Säureanhydrid im ersten Additiv a) ausgewählt aus Trimellitsäureanhydrid, Succinsäureanhydrid, Phthalsäureanhydrid oder Gemischen daraus, besonders bevorzugt ist das Säureanhydrid Trimellitsäureanhydrid.

In einer bevorzugten Ausführungsform in Verbindung mit einer der oben oder unten genannten Ausführungsformen ist das Oxazolin im zweiten Additiv b) ausgewählt aus der Gruppe bestehend aus 1,3-Phenylbisoxazolin und 1,4-Phenylbisoxazolin oder Gemischen daraus. Das Amin im zweiten Additiv b) ist vorzugsweise ausgewählt aus der Gruppe bestehend aus Tris(hydroxymethyl)aminomethan und Bis(hexamethylen)triamin oder Gemischen daraus,

In einer weiteren bevorzugten Ausführungsform in Verbindung mit einer der oben oder unten genannten Ausführungsformen ist die Verbindung zur Kettenverlängerung oder Kettenverzweigung im dritten Additiv c) ausgewählt aus Pyromellitsäuredianhydrid und Ethylen-Maleinsäureanhydrid-Copolymer und Diphosphoniten oder Gemischen daraus.

In einer anderen bevorzugten Ausführungsform in Verbindung mit einer der oben oder unten genannten Ausführungsformen wird in Schritt d) das Additiv a) eingesetzt. Besonders bevorzugt wird in Schritt d) das Additiv a) und in Schritt e) das Additiv b) eingesetzt.

In einer weiteren bevorzugten Ausführungsform in Verbindung mit einer der oben oder unten genannten Ausführungsformen wird in Schritt d) das Additiv c) eingesetzt. Besonders bevorzugt wird in Schritt d) das Additiv c) und in Schritt e) das Additiv a) oder in Schritt d) das Additiv c) und in Schritt e) das Additiv b) eingesetzt. Möglich ist auch eine Ausgestaltung des Verfahrens, in dem in Schritt d) das Additiv a) und in Schritt e) das Additiv c) eingesetzt wird.

Das Polyamid ist in einer bevorzugten Ausführungsform in Verbindung mit einer der oben oder unten genannten Ausführungsformen ausgewählt aus unverstärktem, PA6, PA6.6, PA4.6, PA11 oder PA12, besonders bevorzugt ist das Polyamid unverstärktes PA6.

In einer anderen bevorzugten Ausführungsform in Verbindung mit einer der oben oder unten genannten Ausführungsformen ist das Polyamid ausgewählt aus verstärktem PA6, PA6.6, PA4.6, PA11 oder PA12, besonders bevorzugt ist das Polyamid ein glasfaserverstärktes Polyamid, insbesondere PA6, verstärkt mit 30 bis 50 Gew.-% Glasfasern.

In einer weiteren Ausführungsform in Verbindung mit einer der oben oder unten genannten Ausführungsformen ist das Polyamid ausgewählt aus verstärkten oder unverstärkten teilaromatischen Polyamiden bei denen sich die Monomere zum Teil von aromatischen Grundkörpern ableiten oder aus entsprechenden Copolyamiden oder aus Gemischen von teilaromatischen Polyamiden bzw. Copolyamiden miteinander und / oder mit aliphatischen Polyamiden bzw. Copolyamiden.

In einer weiteren bevorzugten Ausführungsform in Verbindung mit einer der oben oder unten genannten Ausführungsformen ist die Säure und/oder das Säureanhydrid, das Oxazolin oder das Amin und die Verbindung zur Kettenverlängerung oder Kettenverzweigung in einem polymeren Träger eingebracht und jeweils in einer Menge von 1 bis 50 Gew.-%, besonders bevorzugt 5 bis 30 Gew.-%, insbesondere 10 bis 25 Gew.-% enthalten, bezogen auf die Gesamtmenge des Additivs.

Vorzugsweise beträgt das Gewichtsverhältnis von Säure und/oder Säureanhydrid zu polymerem Träger, das Gewichtsverhältnis von Oxazolin oder Amin zu polymerem Träger und das Gewichtsverhältnis von Verbindung zur Kettenverlängerung oder Kettenverzweigung zu polymerem Träger in einer bevorzugten Ausführungsform in Verbindung mit einer der oben oder unten genannten Ausführungsformen 1 : 2 bis 1 : 20, besonders bevorzugt 1 : 2 bis 1 : 15, insbesondere 1 : 3 bis 1 : 5.

Mit dem erfindungsgemäßen Verfahren können alle zuvor genannten Polyamide und Blends, sowohl ungefüllte bzw. unverstärkte, als auch gefüllte bzw. verstärkte Varianten modifiziert werden. Als Füllstoffe / Verstärkungsstoffe können beispielsweise Glasfasern, Kohlefasern, Glaskugeln, Kieselgur, feinkörnige Mineralien, Talkum, Kaolin, Schichtsilikate, CaF₂, CaCO₃ und Aluminiumoxide Verwendung finden.

Das Polyamid ist in einer bevorzugten Ausführungsform in Verbindung mit einer der oben oder unten genannten Ausführungsformen ausgewählt aus unverstärktem, PA6, PA6.6, PA4.6, PA11 oder PA12, besonders bevorzugt ist unverstärktes PA6 oder PA6.6.

In einer anderen bevorzugten Ausführungsform in Verbindung mit einer der oben oder unten genannten Ausführungsformen ist das Polyamid ausgewählt aus verstärktem PA6, PA6.6, PA4.6, PA11 oder PA12, besonders bevorzugt ist das Polyamid ein glasfaserverstärktes Polyamid, insbesondere PA6 oder PA 6.6, verstärkt mit 20 bis 70 Gew.-% Glasfasern, wie etwa 30 bis 50 Gew.-%.

In einer weiteren bevorzugten Ausführungsform in Verbindung mit einer der oben oder unten genannten Ausführungsformen enthält mindestens eines der erfindungsgemäß einzusetzenden Additive oder aber das zu modifizierende Polyamid weiter mindestens einen Zuschlagstoff ausgewählt aus der Gruppe bestehend aus Antioxidantien, Nukleierungsmitteln, Stabilisatoren, Schmiermitteln, Formentrennmitteln, Gleitfähigkeitsverbesserern, Füllstoffen, Färbemitteln, Flammverzögerern und -schutzmitteln, Weichmachern, Schlagzähmodifikatoren, Antistatika, Verarbeitungshilfsmitteln, Polyolen und deren Derivaten, sowie weiteren Polymeren, die üblicherweise mit Polyamiden compoundiert werden oder Gemischen daraus. Besonders bevorzugt enthält das Additiv zusätzlich Antioxidantien, Polyole oder Derivate davon, Nukleierungsmittel und/oder Schmiermittel. Dadurch können in einem Verarbeitungsschritt sowohl das modifizierende Additiv als auch die für die gewünschte Endanwendung weiter erforderlichen Zuschlagsstoffe in das Polyamid eingeführt werden. Dies vereinfacht die Polyamidverarbeitung, da zusätzlich Einmischvorgänge und Mischstufen entfallen können.

Geeignete Antioxidantien sind sekundäre aromatische Amine, Phosphite, organische Sulfide, wie Thioester, Kupfersalze und Kupferkomplexe (in Kombination mit halogenhaltigen Synergisten) und sterisch gehinderte Phenole (typischerweise in Kombination mit Phosphiten oder anderen sekundären Antioxidantien).

Geeignete Nukleierungsmittel sind anorganische Verbindungen, z. B. Talkum, pyrogene Kieselsäuren, Kaolin; organische Verbindungen, z. B. Salze von Mono- oder Polycarbonsäuren, wie Calciumstearat oder -montanat, Lithiummontanat, Natriumbenzoat, Aluminium-tert-butylbenzoat, Salze von Adipinsäure, Dibenzylidensorbitole und Derivate davon, Salze von Phosphonsäureestern; Oligomere und Polymere, z. B. Oligomere von Caprolactam, Polyamid 2.2.

Geeignete Schmiermittel und Gleitfähigkeitsverbesserer sind langkettige Fettsäuren und deren Derivate, z.B.: Fettsäureamide, Stearinsäure, Stearinsäuresalze, Stearate; Fettalkohole und deren Ester; Paraffinwachse; Polyolefinwachse, z. B. Polyethylenwachse und polare Polyethylenwachse; Montanwachse, z. B. basierend auf Estern, teilverseiften Estern, Montansäure; Amidwachse; modifizierte Kohlenwasserstoffwachse sowie Molybdändisulfid.

Geeignete Polyole und Derivate davon sind Polyole oder deren Ether- oder Esterderivate, insbesondere mehrwertige Alkohole oder deren Ether- oder Esterderivate, die als Hitzestabilisatoren und Flammschutzmittel bekannt sind. Derartige Zuschlagstoffe haben im Rahmen der vorliegenden Erfindung sich als überraschend wirksame Komponenten erwiesen, die die Fließfähigkeit unerwartet steigern, ohne dass die mechanischen Kennwerte absinken. Bekannte Beispiele derartiger Verbindungen sind Polyole mit 2 bis 12 Hydroxylgruppen und einem Molekulargewicht von 64 bis 2000 g/mol. Besonders geeignete Beispiele sind aliphatische Polyole mit 3 oder mehr -OH Gruppen, wie Pentaerythritol, Dipentaerythritol, Tripentaerythritol und Ether- oder Esterderivate dieser Verbindungen, insbesondere Dipentaerythritol.

Derartige Polyole oder Derivate davon lassen sich einfach und durch bekannte Maßnahmen in die erfindungsgemäßen Additive (1), (2) und (3) einführen. Dabei hat sich überraschend gezeigt, dass durch die Einführung dieser Polyole (insbesondere von Dipentaerythritol) als Bestandteil des Additivs eine unerwünschte Belagsbildung auf den hergestellten Formteilen deutlich reduziert werden konnte im Vergleich zu der direkten Zugabe des Polyols während der Verarbeitung.

Weitere Beispiele dieser Zuschlagstoffe sind wie folgt:
Färbemittel: Titandioxid, Bleiweiß, Zinkweiß, Liptone, Antimonweiß, Ruß, Eisenoxidschwarz, Manganschwarz, Kobaltschwarz, Antimonschwarz, Bleichromat, Mennige, Zinkgelb, Zinkgrün, Cadmiumrot, Kobaltblau, Berliner Blau, Ultramann, Manganviolett, Cadmiumgelb, Schweinfurter Grün, Molybdänorange und -rot, Chromorange und -rot, Eisenoxidrot, Chromoxidgrün, Strontiumgelb, Molybdänblau, Kreide, Ocker, Umbra, Grünerde, Terra di Siena gebrannt und Graphit.

Flammverzögerer und Flammschutzmittel: Antimontrioxid, Hexabromcyclododecan, Tetrachlor- oder Tetrabrombisphenol und halogenierte Phosphate, Borate, Chlorparaffine, roter Phosphor. Geeignet sind auch weitere halogenfreie Flammverzögerer und Flammschutzmittel, insbesondere Melamincyanurat, Melaminpolyphosphat und Aluminiumdiethylphosphinat (DEPAL).

Füllstoffe: Glasfasern, Kohlefasern, Glaskugeln, Kieselgur, feinkörnige Mineralien, Talkum, Kaolin, Schichtsilikate, CaF₂, CaCO₃, Aluminiumoxide etc.

Formentrennmittel und Verarbeitungshilfsstoffe: Wachse (Montanate), Montansäurewachse, Montanesterwachse, Polysiloxane, Stearate, Polyvinylalkohol, SiO₂, Calciumsilikate.

Schlagzähmodifikatoren: Polybutadien, EPM, EPDM, HDPE, Butylacrylate, MAH-funktionalisierte Polymere, funktionalisierte Olefin-Acrylatcopolymere etc.

Antistatika: Ruß, mehrwertige Alkohole, Fettsäureester, Amine, Säureamide, quarternäre Ammoniumsalze.

Diese Zuschlagstoffe können in den üblichen, dem Fachmann bekannten Mengen verwendet werden. Erfindungsgemäß ist es möglich, die Zuschlagsstoffe bereits in das erfindungsgemäße Additiv einzuarbeiten, so dass bei der Herstellung von modifizierten Polyamiden oder Formteilen aus Polyamid bereits ein Additiv alle notwendigen Modifikatoren und Zuschlagsstoffe umfasst. Alternativ ist jedoch auch eine andere Vorgehensweise möglich, also die Einmischung aller oder eines Teils der gewünschten Zuschlagsstoffe über unterschiedliche Additive, die auch beispielsweise an unterschiedlichen Stellen (bei unterschiedlichen Temperaturen) in den Herstellungsprozess gegeben werden. Geeignete Ausführungsformen kann der Fachmann auf der Grundlage seines Fachwissens herstellen.

In einer bevorzugten Ausführungsform in Verbindung mit einer der oben oder unten genannten Ausführungsformen werden die Schritte d) und e), einschließlich der vorstehend beschriebenen Ausführungsformen d'), d"), e'), e") etc. und aller möglichen Kombinationen, in einem Extruder durchgeführt.

In einer bevorzugten Ausführungsform in Verbindung mit einer der oben oder unten genannten Ausführungsformen erfolgen die Schritte d) und e), einschließlich der vorstehend beschriebenen Ausführungsformen d'), d"), e'), e") etc. und aller möglichen Kombinationen entweder in einem Produktionsschritt mit unterschiedlichen Dosierorten auf der gleichen Anlage oder in zwei Produktionsschritten. Alternativ oder ergänzend zu einer Aufkondensation mit Hilfe eines Kettenverlängerers oder Kettenverzweigers kann auch ein höherviskoses Polyamid entweder am zweiten Dosierort oder im zweiten Prozessschritt zugemischt werden.

Eine spätere Zudosierung ermöglicht es beispielsweise, zunächst weitere Zuschlagstoffe mit der weniger viskosen Schmelze des Polyamids gut zu mischen. Erst anschließend erfolgt die Aufkondensierung und damit die Zunahme der Viskosität der Mischung, was aber keinen nachteiligen Effekt auf die Homogenität der Verteilung der Zuschlagstoffe hat. Dies ist insbesondere vorteilhaft, wenn partikelförmige Füllstoffe eingearbeitet werden sollen.

In einer weiteren bevorzugten Ausführungsform in Verbindung mit einer der oben oder unten genannten Ausführungsformen können die in Schritt d) eingesetzten Additive direkt am Einfülltrichter zusammen mit dem Polyamidgranulat (entweder vorgemischt oder über separates Dosiersystem) zugeführt werden. Der zur Aufkondensierung optional verwendete Kettenverlängerer oder Kettenverzweiger kann dann über eine Seitendosierung direkt auf der gleichen Compoundierlinie zugegeben werden, vorzugsweise auf einer Anlage mit einem Extruder mit großem L/D Verhältnis (Verhältnis von Länge L der Schnecke zu Durchmesser D der Schnecke), beispielsweise einem Mehrwellenextruder. Alternativ kann das Vermischen von Polyamid und Additiv in den Schritten d) und e), einschließlich der vorstehend beschriebenen Ausführungsformen d'), d"), e'), e") etc. und aller möglichen Kombinationen, in einem separaten Compoundierschritt erfolgen.

Der Kettenverlängerer oder Kettenverzweiger wird in einer bevorzugten Ausführungsform in Verbindung mit einer der oben oder unten genannten Ausführungsformen in einer Menge von 0,005 bis 10 Gew.-%, besonders bevorzugt 0,01 bis 5 Gew.-%, insbesondere 0,5 bis 3 Gew.-%, bezogen auf das Polyamid, zugegeben.

In einer weiteren bevorzugten Ausführungsform in Verbindung mit einer der oben oder unten genannten Ausführungsformen erfolgt nach dem Vermischen mit den Additiven in den Schritten d) und e), einschließlich der vorstehend beschriebenen Ausführungsformen d'), d"), e'), e") etc. und aller möglichen Kombinationen, eine Einarbeitung eines partikelförmigen Füllstoffs in die Schmelze.

In einer bevorzugten Ausführungsform in Verbindung mit einer der oben oder unten genannten Ausführungsformen werden Glasfasern als Füllstoff eingesetzt. Im Fall der Einarbeitung von Glasfasern ist es besonders bevorzugt, den Kettenverlängerer oder Kettenverzweiger gleichzeitig mit den Glasfasern zu der Schmelze von Schritt e) (e'), e")) zu geben. Dies stellt zum einen sicher, dass die Glasfasern nicht übermäßig mechanisch beansprucht und dabei zerstört werden, gleichzeitig kann durch die zügige, aber nicht zu schnelle Aufkondensationsreaktion sichergestellt werden, dass die Glasfasern gleichmäßig in der aufgeschmolzenen Masse verteilt werden.

Das erfindungsgemäße Verfahren wird in den üblichen Kunststoffverarbeitungsvorrichtungen durchgeführt, die dem Fachmann gut bekannt sind. Diese Vorrichtungen sind Schmelzemischer und schließen Einwellen- und Doppelschneckenextruder, wobei die zwei Schnecken sich gleich oder gegenläufig drehen können, Schmelze-Knetwerkzeuge, wie Banbury-Mischer, Buss-Kneter und Planetwalzenextruder, ein. Vorzugsweise wird das Verfahren jedoch in gut mischenden Extrudern durchgeführt. Die dabei nötigen Verfahrensparameter und die spezifischen Ausgestaltungen der Vorrichtungen hängen von der Art der Ausgangsstoffe und den erwünschten Ergebnissen und Endprodukten ab, sind aber dem Fachmann gut bekannt.

Da über die jeweiligen Additive, die Zugabemenge des Kettenverlängerers oder Kettenverzweigers und die Verfahrensparameter die Eigenschaften des aufkondensierten Polyamids über einen weiten Bereich variiert werden können, sind die erhaltenen Polyamide in vielen Bereichen einsetzbar und können auf den gewünschten Anwendungszweck maßgeschneidert hergestellt werden.

Zum Beispiel können die Polyamide zum Faserspinnen verwendet werden mit dem zusätzlichen Vorteil, dass anfallender Faserabfall geeignet recycliert werden kann. Auch Folienblasen und Folienpressen ist mit den erfindungsgemäßen Polyamiden möglich. Insbesondere wird das erfindungsgemäße Verfahren so ausgestaltet, dass die erhaltenen Polyamide durch Spritzguss geformt werden, wodurch Formteile mit sehr guten mechanischen Eigenschaften erhalten werden. Die Variabilität des Verfahrens erlaubt aber auch die Herstellung von Polyamiden, die zum Tiefziehen, Profilextrudieren, Folienextrudieren und Blasformen geeignet sind. Ebenso ist ein Einsatz als Schmelzkleber möglich.

Die vorliegende Erfindung ist vorstehend in der Variante beschrieben worden, dass zwei der erfindungsgemäßen Additive eingesetzt werden. Dem Fachmann ist aber klar, dass das erfindungsgemäße Verfahren auch derartige Varianten umfasst, bei denen ein drittes erfindungsgemäßes Additiv eingesetzt wird, so dass eine dreistufige Modifikation und/oder Funktionalisierung erfolgt. Ebenfalls ist dem Fachmann klar, dass in dem erfindungsgemäßen Verfahren auch andere Additive zusammen und/oder gleichzeitig mit den erfindungsgemäß einzusetzenden Additiven oder aber auch in Form weiterer Additivzusammensetzungen zu anderen, geeigneten Zeitpunkten im Verfahren zum Einsatz kommen können.

Die folgenden Beispiele beschreiben die vorliegende Erfindung.

### Beispiele:

Bereitstellung der Additive:

| **Anteil [Gew.-%]** | **Additiv 1** | **Additiv 2** | **Additiv 3** | **Additiv 4** |
|---|---|---|---|---|
| Adipinsäure | 25 | | | |
| 1,3 Phenylbisoxazolin | | 25 | | |
| Ethylen-Maleinsäureanhydrid-Copolymer (alternierend) | | | 25 | |
| Pyromellitsäuredianhydrid | | | | 25 |
| Ethylen-Methylacrylat-Copolymer | 75 | 75 | 75 | 75 |

Die Additive 1 bis 4 wurden jeweils getrennt voneinander auf einem Doppelschneckenextruder Leistritz ZSE 27 MAXX 48D bei 100 °C bis 180 °C (in einem entsprechenden Temperaturprofil) mit einem Durchsatz von 18kg/h hergestellt.

### Beispiel 1:

Polyamide mit niedriger Viskosität und hoher Carboxylendgruppenkonzentration wurden mit Additiv 1 und einem Polyamid 6 (Tarnamid® T-27 der Firma Grupa Azoty) jeweils auf einem Doppelschneckenextruder Leistritz ZSE 27 MAXX 48D bei 250°C mit einem Durchsatz von 20kg/h hergestellt. Die Endgruppenkonzentrationen von Tarnamid® T-27 wurden wie folgt bestimmt: Aminoendgruppen 56,1 mmol/kg; Carboxylendgruppen 51,5 mmol/kg.

Folgende Compounds wurden hergestellt:

**Tabelle 1:**

| | **Polyamid 6 [Gew**.**-%]** | **Additiv 1 [Gew.-%]** | **Relative Vis-kosität Compound** | **Carboxylendgruppen [mmol/kg]** | **Aminoendgruppen [mmol/kg]** |
|---|---|---|---|---|---|
| R01 | 99 | 1 | 2,65 | 60,1 | 52,6 |
| R02 | 98,5 | 1,5 | 2,64 | 65,0 | 52,1 |

Zu den Varianten R01 und R02 wurde Additiv 2 und Glasfasern (ChopVantage® HP3540 der Firma PPG Industries Fiber Glass) auf einem Doppelschneckenextruder Leistritz ZSE 27 MAXX 48D bei 250°C mit einem Durchsatz von 20kg/h eincompoundiert. Die Additivdosierung erfolgte in Zone 1 (antriebsseitig) in das noch nicht geschmolzene Polyamid, die Dosierung der Glasfaser in Zone 3 (Richtung Düse).

Vergleichsbeispiel R07 wurde wie oben beschrieben mit Polyamid 6 (Tarnamid® T-27 der Firma Grupa Azoty) mit einem Durchsatz von 15kg/h durchgeführt ohne Zusatz von Additiven. Folgende Compounds wurden hergestellt:

**Tabelle 2:**

| | **R01 [Gew.-%]** | **R02 [Gew.-%]** | **Polyamid 6 (Tarnamid® T-27) [Gew.-%]** | **Glasfaser ChopVantage® HP3540 [Gew.-%]** | **Additiv 2 [Gew.-%]** |
|---|---|---|---|---|---|
| R03 | 69,81 | | | 30 | 0,76 |
| R04 | 69,61 | | | 30 | 1,56 |
| R05 | | 69,81 | | 30 | 0,76 |
| R06 | | 69,61 | | 30 | 1,56 |
| R07 | | | 70 | 30 | |

Es wurden Massedruck, Drehmoment des Extruders, die Viskosität der Compounds, die Endgruppenkonzentrationen und die Viskosität nach Spritzguss an den Prüfkörpern untersucht. Die Ergebnisse sind in Tabelle 3 dargestellt. Des Weiteren wurden mechanische Kennwerte bestimmt und in Tabelle 4 zusammengefasst.

**Tabelle 3:**

| | **Schnecken drehzahl [U/min]** | **Gesamt durchsatz [kg/h]** | **Drehmoment [%]** | **Massedruck [bar]** | **Spezifische Energie [kWh/kg]** | **Relative Vis-kosität Compound** | **Relative Vis-kosität Spritzguss** | **Carboxylendgruppen [mmol/kg]** | **Aminoendgruppen [mmol/kg]** |
|---|---|---|---|---|---|---|---|---|---|
| R03 | 250 | 20 | 63 | 21 | 1,25 | 2,66 | 2,66 | 34,2 | 31,9 |
| R04 | 250 | 20 | 64 | 22 | 1,25 | 2,68 | 2,68 | 26,8 | 32,5 |
| R05 | 250 | 20 | 62 | 20 | 1,23 | 2,62 | 2,62 | 36,3 | 31,7 |
| R06 | 250 | 20 | 62 | 22 | 1,24 | 2,64 | 2,64 | 27,5 | 30,4 |
| R07 (Vergleichsbeispiel) | 200 | 15 | 61 | 19 | 1,22* | 2,73 | 2,77 | 34,9 | 36,8 |

Bei R03 bis R06 wurden Additiv 2 und Glasfasern in die niedrigviskosen Varianten R01 und R02 eingearbeitet. Dadurch konnte die Schneckendrehzahl und somit der Gesamtdurchsatz signifikant gesteigert werden im Vergleich zu dem Beispiel mit einem unmodifizierten Polyamid 6 (R07), während Extruderdrehmoment, Massedruck und spezifische Energie jeweils auf gleichem Niveau bleiben. Es wurde auch gezeigt, dass eine Dosierung des Additiv 2 in Zone 1 vor der Dosierung der Glasfaser in Zone 3 möglich ist.

Weiterhin weisen die erfindungsgemäßen Varianten R03 bis R06 eine exzellente Verarbeitungsstabilität (Schmelzestabilität) auf, was sich darin zeigt, dass die relative Löungsviskosität der Compounds und der Spritzgußteile jeweils gleich ist. Dagegen zeigt das Vergleichsbeispiel R07 einen signifikanten Viskositätsaufbau.

Additiv 2 reagiert mit beiden Endgruppen (Amino- und Carboxylendgruppen), bevorzugt aber mit den Säureendgruppen des Polyamids. Daher sind sowohl die Aminoendgruppenkonzentrationen wie auch die Carboxylendgruppenkonzentrationen der Varianten R03 bis R06 deutlich reduziert gegenüber den Ausgangswerten sowie gegenüber dem Vergleichsbeispiel R07. Die niedrige Aminoendgruppenkonzentration führt zu einer geringeren Rückbildung und Freisetzung des Monomeren Caprolactam während der Verarbeitung in der Schmelze. Dadurch kann beispielsweise die Belastung durch das Ausgasen von Caprolactam bei Wärmebelastung von Formteilen reduziert werden. Beispielsweise werden bei einem Thermofixierprozess, wie er in der Textilveredlung üblich ist, bis zu 50 % des (während der Faserextrusion durch Umkehrung der Polyadditionsreaktion zurückgebildeten) Caprolactams aus der Faser emittiert. Hierbei werden oft die geltenden Emissionsgrenzwerte für Caprolactam überschritten.

Die niedrige Carboxylendgruppenkonzentrationen der erfindungsgemäßen Varianten führt unter anderem dazu, dass die Hydrolysereaktion, welche durch Säuregruppen katalysiert wird, bei einem solchen Polyamid mit niedrigen Carboxylendgruppen deutlich langsamer abläuft. Entsprechende Polyamide mit niedrigen bis sehr niedrigen Carboxylendgruppen (z.B. R04 und R06) eignen sich daher hervorragend zur Herstellung von Produkten, die den Einsatz hydrolysestabiler Polyamide erfordern. Der Gehalt an Carboxylendgruppen kann, je nach Erfordernis bzw. intendierter Verwendung, weiter reduziert werden, durch eine zusätzliche Endgruppenverkappung oder auch durch die Einstellung des Verhältnisses von Additiv (1) zu Additiv (2) im Verfahren der vorliegenden Erfindung.

Verarbeitungsstabil bedeutet in Zusammenhang mit dieser Erfindung ein wesentlich robusteres Verhalten während der Schmelzeverarbeitung zu z.B. Folien, Monofilamenten, Fasern, Spritzgussteilen oder anderen Produkten, welches sich durch verringerte Viskositätsänderung auch bei aggressiveren Verarbeitungsbedingungen auszeichnet. So sind z.B. beim Extrusionsblasformen eine gleichbleibende Extrusionsverarbeitbarkeit und eine geringe Wanddickenschwankung des extrudierten Schlauches sehr wichtig für die Qualität des Fertigteils, z.B. eines Ladeluftrohres für den Automobilbereich. Idealerweise sollen Polyamide bei den Verarbeitungsschritten Spritzguss oder Extrusion keine signifikante Änderung der Viskosität aufweisen. Ein deutlicher Abbau oder Aufbau der Viskosität ist unerwünscht, da dies die Reproduzierbarkeit bei der Verarbeitung beeinträchtigen kann und zudem vor allem zu Inhomogenitäten der mechanischen Eigenschaften über das Werkstoffteil bzw. zu Schwankungen der mechanischen Eigenschaften von Teil zu Teil führt. Dies ist insbesondere dann bedeutsam, wenn genaue Werte eingehalten werden müssen. Die erfindungsgemäßen Beispiele R03 bis R06 zeigen exakt diese Vorteile, die durch die vorliegende Erfindung ermöglicht werden.

Die Bruchdehnung der verstärkten Polyamide ist bei den erfindungsgemäßen Varianten R03 bis R06 deutlich verbessert, ohne dass die Zugfestigkeiten stark abfallen. Das Niveau des mechanischen Eigenschaftsprofils bleibt weitgehend erhalten.

**Tabelle 4:**

| | **Zugfestigkeit [MPa]** | **Bruchdehnung [%]** | **E-Modul [MPa]** |
|---|---|---|---|
| R03 | 191 | 8,7 | 9320 |
| R04 | 186 | 8,4 | 9270 |
| R05 | 188 | 7,7 | 9290 |
| R06 | 186 | 7,6 | 9280 |
| R07 (Vergleichsbeispiel) | 195 | 6 | 9640 |

### Beispiel 2:

Polyamide mit hoher Viskosität wurden mit Additiv 3 und einem Polyamid 6 (Tarnamid® T-27 der Firma Grupa Azoty) jeweils auf einem Doppelschneckenextruder Leistritz ZSE 27 MAXX 48D bei 250°C mit einem Durchsatz von 20kg/h hergestellt.

Folgende Compounds wurden hergestellt:

**Tabelle 5:**

| | **Polyamid 6 [Gew.-%]** | **Additiv 3 [Gew.-%]** | **Relative Viskosität** |
|---|---|---|---|
| R08 | 99 | 1 | 3,78 |
| R09 | 98,5 | 1,5 | 4,77 |

In die Varianten R08 und R09 wurde das Additiv 1 auf einem Doppelschneckenextruder Leistritz ZSE 27 MAXX 48D bei 250°C mit einem Durchsatz von 20kg/h eincompoundiert (R10 und R11). Ein Vergleichsbeispiel (R12) wurde wie oben beschrieben mit Polyamid 6 (Tarnamid® T-27 der Firma Grupa Azoty) mit einem Durchsatz von 15kg/h hergestellt.

Folgende Compounds wurden hergestellt:

**Tabelle 6:**

| | **R08 [Gew.-%]** | **R09 [Gew.-%]** | **Polyamid 6 (Tarnamid® T-27) [Gew.-%]** | **Additiv 1 [Gew.-%]** | **Relative Viskosität** |
|---|---|---|---|---|---|
| R10 | 95 | | | 5 | 3,61 |
| R11 | | 95 | | 5 | 4,08 |
| R12 (Vergleichsbeispiel) | | | 100 | | 2,71 |

Es wurden die Viskosität der Compounds und die Viskosität nach Spritzguss an den Prüfkörpern untersucht. Des Weiteren wurde auch die Fließfähigkeit mit einem Hochdruck-Kapillarrheometer bestimmt. Die Ergebnisse sind in Tabelle 6 und in Figur 1 dargestellt. Des Weiteren wurden die mechanischen Kennwerte bestimmt und in Tabelle 7 dargestellt.

Die hochviskosen Polyamide R08 und R09 zeigen erwartungsgemäß eine sehr hohe scheinbare Viskosität, die deutlich über der des Spritzguss-Standardtyps R12 liegt. Diese hochviskosen Varianten sind daher nicht oder nur sehr schwer spritzgießfähig. Die erfindungsgemäßen Varianten R10 und R11 dagegen zeigen trotz einer hohen relativen Lösungsviskosität eine sogar signifikant niedrigere scheinbare Viskosität in dem für den Spritzguss relevanten Bereich der Schergeschwindigkeit (> 1000/s) im Vergleich zum Spritzguss-Standardtyp R12. Die erfindungsgemäßen Varianten R10 und R11 sind daher sehr gut spritzgießbar und zeichnen sich durch eine gute Fließfähigkeit aus. Ein besonderer Vorteil dieser Varianten ist die deutlich erhöhte Kerbschlagzähigkeit (> 9kJ/m²) gegenüber einem Standard-Spritzgusstyp bei gleichzeitig sehr guter Fließfähigkeit und einem sehr guten mechanischen Eigenschaftsprofil. Beim Einsatz von Schlagzähmodifikatoren zur Erhöhung der Schlagzähigkeit werden üblicherweise die Fließfähigkeit wie auch die Steifigkeit (E-Modul) stark herabgesetzt. Zudem ist die Dispergierung der Schlagzähmodifikatoren in der Polymermatrix zur Ausbildung der erforderlichen Morphologie eine verfahrenstechnisch kritische Aufgabe.

**Tabelle 7:**

| | **Zugfestigkeit [MPa]** | **E-Modul [MPa]** | **Kerbschlagzähigkeit [kJ/m²]** |
|---|---|---|---|
| R10 | 74 | 2750 | 9,24 |
| R11 | 74 | 2790 | 9,00 |
| R12 (Vergleichsbeispiel) | 81 | 2780 | 5,08 |

### Beispiel 3:

Mit Additiv 4 und einem viskosen Polyamid 6 (Tarnamid® T-27 der Firma Grupa Azoty) wurde auf einem Doppelschneckenextruder Leistritz ZSE 27 MAXX 48D bei 250°C mit einem Durchsatz von 20kg/h folgendes Compound mit erhöhter Viskosität hergestellt:

**Tabelle 8:**

| | **Polyamid 6 [Gew.-%]** | **Additiv 4 [Gew.-%]** | **Relative Viskosität Compound** | **Carboxylendgruppen [mmol/kg]** | **Aminoendgruppen [mmol/kg]** |
|---|---|---|---|---|---|
| R16 | 99,5 | 0,5 | 2,85 | 52,5 | 42,5 |

Die Verarbeitung des Polyamid 6 mit Additiv 4 führt zu einem Viskositätsaufbau, sowie zu einer deutlichen Reduktion der Aminoendgruppen, während die Konzentration der Carboxylendgruppen nahezu gleich bleibt.

In das viskose Polyamid R16 wird auf einem Doppelschneckenextruder Leistritz ZSE 27 MAXX 48D bei 250°C mit einem Durchsatz von 20kg/h Additiv 2 eincompoundiert (R17). Vergleichsbeispiel R12 wurde wie oben beschrieben mit Polyamid 6 (Tarnamid® T-27 der Firma Grupa Azoty) mit einem Durchsatz von 15kg/h hergestellt.

Folgende Compounds wurden hergestellt:

**Tabelle 9:**

| | **R16 [Gew.-%]** | **Polyamid 6 (Tarnamid® T-27) [Gew.-%]** | **Additiv 2 [Gew.- %]** | **Relative Viskosität Compound** | **Carboxyl-end-gruppen [mmol/kg]** | **Amino-endgruppen [mmol/kg]** |
|---|---|---|---|---|---|---|
| R17 | 99,24 | | 0,76 | 2,84 | 43,7 | 40,6 |
| R12 | | 100 | | 2,71 | 51,5 | 55,9 |

Die Viskosität der Compounds sowie die Endgruppenkonzentrationen wurden gemessen und in Tabelle 9 dargestellt. Es zeigt sich, dass durch Verarbeitung von R16 mit Additiv 2 kein Viskositätsaufbau erfolgt, die Konzentration der Carboxylendgruppen aber deutlich reduziert wird. Das Additiv wirkt hier also offenbar in erster Linie als Verkappungsmittel für die Carboxylendgruppen.

**Tabelle 10:**

| | **Zugfestigkeit [MPa]** | **E-Modul [MPa]** | **Bruchspannung [MPa]** | **Nominelle Bruchdehnung [%]** |
|---|---|---|---|---|
| R16 | 77,6 | 2750 | 36,4 | 44 |
| R17 | 77,3 | 2740 | 42,5 | 78 |
| R12 | 81 | 2780 | 40,7 | 37 |

Die Ergebnisse hinsichtlich der Mechanik zeigen, dass durch das erfindungsgemäße Verfahren Polyamid-Werkstoffe zugänglich werden, die, wie Variante R17 zeigt, über eine sehr hohe Bruchdehnung (und damit duktiles Bruchverhalten) sowie über eine hohe Bruchspannung verfügen, während Steifigkeit und Zugfestigkeit auf gleichem Niveau verbleiben gegenüber der Vergleichsvariante R12 oder gegenüber der Variante R16, die nur in einem Extrusionsschritt mit Additiv 4 modifiziert wurde. Das erfindungsgemäß erhaltene Eigenschaftsprofil (Variante R17) ist überraschend und erlaubt dem Anwender neue Werkstoffeigenschaften hinsichtlich der fortlaufend steigenden Anforderungen betreffend Metallersatz durch polymere Werkstoffe.

### Beispiel 4:

Analog zu Beispiel 2, Variante R11, wurden Additiv 1 und Additiv 3 gleichzeitig in einem Compoundierschritt in Polyamid 6 (Tarnamid® T-27 der Firma Grupa Azoty) auf einem Doppelschneckenextruder Leistritz ZSE 27 MAXX 48D bei 250°C mit einem Durchsatz von 15kg/h verarbeitet.

Folgendes Compound wurde hergestellt:

**Tabelle 11:**

| | **Polyamid 6 (Tarnamid® T-27) [Gew.-%]** | **Additiv 1 [Gew.-%]** | **Additiv 3 [Gew.-%]** | **Relative Viskosität** |
|---|---|---|---|---|
| R18 | 93,6 | 5 | 1,4 | 3,50 |

Es wurden die die mechanischen Kennwerte, die relative Viskosität und die Fließfähigkeit mit einem Hochdruck-Kapillarrheometer bestimmt. Die Ergebnisse sind in Tabelle 12 und in Figur 1 dargestellt.

Die erfindungsgemäße Variante R18 bei gleichzeitigem Zusatz der Additive 1 und 3 ist mit Variante R11 in ihren Kennwerten vergleichbar. R18 ist sehr gut spritzgießbar und zeichnet sich durch eine sehr gute Fließfähigkeit aus, trotz der hohen gemessenen relativen Viskosität von 3,50. Auch das sehr gute mechanische Eigenschaftsprofil und die deutlich erhöhte Kerbschlagzähigkeit findet man bei der gleichzeitigen Verwendung der Additive wieder. Somit kann gezeigt werden, dass es auch möglich ist, die beiden reaktiven Additive gleichzeitig dem Polyamid zuzugeben.

**Tabelle 12:**

| | **Zugfestigkeit [MPa]** | **E-Modul [MPa]** | **Kerbschlagzähigkeit [kJ/m²]** |
|---|---|---|---|
| R11 | 74 | 2790 | 9,00 |
| R18 | 73 | 2730 | 8,24 |

## Patentansprüche

1. Verfahren zur Kontrolle der molekularen Struktur und gezielten Funktionalisierung von Polyamiden, umfassend die Reaktion eines Polyamids mit mindestens zwei der nachfolgend definierten Additive, ausgewählt unter:
a) einem ersten Additiv, umfassend eine Säure und/oder ein Säureanhydrid und einen vorzugsweise polymeren Träger, wobei die Säure und/oder das Säureanhydrid in dem vorzugsweise polymeren Träger eingebracht und beispielsweise in der Schmelze, gleichmäßig verteilt wird,
b) einem zweiten Additiv, umfassend ein Oxazolin und/oder Amin optional vermischt mit einem Träger, vorzugsweise in einem polymeren Träger,
c) einem dritten Additiv, umfassend eine Verbindung zur Kettenverlängerung oder Kettenverzweigung optional vermischt mit einem Träger, vorzugsweise in einem polymeren Träger, wobei
die Reaktion des Polyamids mit den mindestens zwei Additiven so gesteuert wird, dass zunächst die Reaktion mit einem der Additive erfolgt und anschließend die Reaktion mit dem anderen Additiv.

2. Verfahren nach Anspruch 1, umfassend das
d) Vermischen von Polyamid mit einem der Additive a) bis c) in der Schmelze und anschließend
e) Vermischen des in Schritt d) gebildeten Gemisches oder Reaktionsproduktes mit einem der anderen Additive a) bis c).

3. Verfahren nach Anspruch 2, **dadurch gekennzeichnet, dass** die Säure und/oder das Säureanhydrid in dem ersten Additiv a) eine Carbonsäure bzw. ein Carbonsäureanhydrid ist, und/oder dass die Säure und/oder das Säureanhydrid in dem ersten Additiv a) ausgewählt ist aus der Gruppe bestehend aus Adipinsäure, Pimelinsäure, Korksäure, Azelainsäure, Sebacinsäure, Undecandicarbonsäure, Dodecandicarbonsäure, Valeriansäure, Trimethylessigsäure, Capronsäure, Caprylsäure, Terephthalsäure, Isophthalsäure, Trimellitsäureanhydrid, Succinsäureanhydrid, Phthalsäureanhydrid oder Gemischen daraus.

4. Verfahren nach einem der Ansprüche 1 bis 3, **dadurch gekennzeichnet, dass** das Oxazolin in dem zweiten Additiv b) ausgewählt ist aus der Gruppe bestehend aus 1,3-Phenylbisoxazolin und 1,4-Phenylbisoxazolin und das Amin ausgewählt aus der Gruppe bestehend aus Tris(hydroxymethyl)aminomethan und Bis(hexamethylen)triamin oder Gemischen daraus.

5. Verfahren nach einem der Ansprüche 1 bis 4, **dadurch gekennzeichnet, dass** die Verbindung in dem dritten Additiv c) ausgewählt ist aus Pyromellitsäuredianhydrid und Ethylen-Maleinsäureanhydrid-Copolymer und Diphosphoniten oder Gemischen daraus.

6. Verfahren nach einem der Ansprüche 1 bis 5, wobei in Schritt d) das Additiv a) oder das Additiv c) eingesetzt wird.

7. Verfahren nach einem der Ansprüche 1 bis 6, **dadurch gekennzeichnet, dass** die Säure und/oder das Säureanhydrid des ersten Additivs, das Oxazolin und/oder Amin des zweiten Additivs und die Verbindung zur Kettenverlängerung oder Kettenverzweigung des dritten Additivs jeweils in einer Menge von 1 bis 50 Gew.-% enthalten ist, bezogen auf die Gesamtmenge des Additivs.

8. Verfahren nach einem der Ansprüche 1 bis 7, **dadurch gekennzeichnet, dass** der polymere Träger ausgewählt ist aus einem Polymer oder Copolymer aus den Monomeren Ethylen, Polypropylen oder andere Olefine, Methacrylsäure, Vinylacetat, Acrylsäure, Acrylsäureester, oder Methacrylsäureester, besonders bevorzugt ein Olefin-Acrylsäureester-Copolymer oder ein Olefin-Methacrylsäureester-Copolymer, insbesondere ein Ethylen-Methylacrylat-Copolymer (EMA), ein Ethylen-Ethylacrylat-Copolymer (EEA) oder ein Ethylen-Butylacrylat-Copolymer (EBA).

9. Verfahren nach einem der Ansprüche 1 bis 8, **dadurch gekennzeichnet, dass** das Gewichtsverhältnis von Säure und/oder Säureanhydrid zu polymeren Träger, das Gewichtsverhältnis von Oxazolin und/oder Amin zu polymerem Träger und das Gewichtsverhältnis von Verbindung zur Kettenverlängerung oder Kettenverzweigung zu polymerem Träger jeweils 1:2 bis 1:20 beträgt.

10. Verfahren nach einem der Ansprüche 1 bis 9, **dadurch gekennzeichnet, dass** die Schritte d) und e) in einem Extruder durchgeführt werden; und/oder
die Schritte d) bis e) an unterschiedlichen Dosierorten in der gleichen Vorrichtung durchgeführt werden; und/oder
die Schritte d) bis e) separat durchgeführt werden.

11. Verfahren nach einem der Ansprüche 1 bis 12, **dadurch gekennzeichnet, dass** das die Zugabe des einen Kettenverlängerers oder Kettenverzweigers zeitgleich mit der Zugabe von Glasfasern erfolgt.

12. Verfahren nach mindestens einem der Ansprüche 1 bis 11, **dadurch gekennzeichnet, dass** der Kettenverlängerer oder Kettenverzweiger ausgewählt ist aus Diisocyanat, Epoxid, Dicarbonat, Bisoxazolin, Oligo- und/oder Polyurethan, (Co-)Polyamid oder Gemischen daraus, vorzugsweise ein (Co-)Poylamid.

13. Verfahren nach Anspruch 11 oder 12, **dadurch gekennzeichnet, dass** der Kettenverlängerer oder Kettenverzweiger in einer Menge von 0,005 bis 10 Gew.-%, bezogen auf das Polyamid, zugegeben wird.

14. Verfahren nach einem der Ansprüche 1 bis 13, **dadurch gekennzeichnet, dass** in Schritt e) eine Einarbeitung eines partikelförmigen Füllstoffs in die Polymerschmelze erfolgt.

15. Polyamid, erhältlich durch ein Verfahren nach mindestens einem der Ansprüche 1 bis 14.
